# EUROPÄISCHE PATENTANMELDUNG

(11) **EP 4 495 538 A1**
(43) Veröffentlichungstag der Anmeldung: **22.01.2025**
(21) Anmeldenummer: 24188820.5
(22) Anmeldetag: 16.07.2024
(51) Int. Cl.: G01B 9/02017, G01B 9/02098, G01M 11/00, G01M 11/02

(54) **INTERFEROMETRISCHE MESSVORRICHTUNG**

(30) Priorität: 20.07.2023 DE 102023206874
(71) Anmelder: Carl Zeiss SMT GmbH, 73447 Oberkochen (DE)
(72) Erfinder: SIEGLER, Steffen, 73447 Oberkochen (DE)
(74) Vertreter: Zeuner Summerer Stütz

(57) **Zusammenfassung**

Eine Messvorrichtung (10; 110; 210; 310; 410; 510; 610; 710) zur interferometrischen Bestimmung einer Eigenschaft (50; 52) einer Form (50) einer Testoberfläche (12) eines Prüfobjekts (14) umfasst eine Bestrahlungseinrichtung (22) zum Erzeugen einer Eingangswelle (24), ein Aufspaltungsmodul (18; 118; 318; 418; 518), welches dazu konfiguriert ist, aus der Eingangswelle zwei Planwellen (32, 34) mit parallelen Ausbreitungsrichtungen, welche quer zu den Ausbreitungsrichtungen zueinander versetzt sind, zu erzeugen, ein Wellenfrontanpassungsmodul (20; 720) zum Erzeugen von zwei Messwellen (44, 46) durch Anpassen der jeweiligen Wellenfront der zueinander versetzten Planwellen an eine Sollform der optischen Testoberfläche, sowie einen Detektor (56) zum Erfassen mindestens eines Interferogramms (64), welches durch Überlagerung der Messwellen (44r, 46r) nach deren Wechselwirkung mit der Testoberfläche erzeugt wird.

## Beschreibung

Die vorliegende Anmeldung beansprucht die Priorität der deutschen Patentanmeldung 10 2023 206 874.5 vom 20. Juli 2023. Die gesamte Offenbarung dieser Patentanmeldung wird durch Bezugnahme in die vorliegende Anmeldung aufgenommen.

### Hintergrund der Erfindung

Die Erfindung betrifft eine Messvorrichtung sowie ein Verfahren zur interferometrischen Bestimmung einer Eigenschaft einer Form einer Testoberfläche eines Prüfobjekts. Als Prüfobjekt kann beispielsweise ein optisches Element für die Mikrolithographie vermessen werden. Die bestimmte Formeigenschaft kann insbesondere die Form der Testoberfläche selbst sein. Durch das Bedürfnis nach immer kleineren Strukturen werden in der Mikrolithographie immer höhere Anforderungen an die optischen Eigenschaften von eingesetzten optischen Elementen gestellt. Die optische Oberflächenform dieser optischen Elemente muss daher mit möglichst hoher Genauigkeit bestimmt werden.

Zur hochgenauen interferometrischen Vermessung optischer Oberflächen bis in den Subnanometerbereich sind interferometrische Messvorrichtungen und Verfahren bekannt, bei denen ein diffraktives optisches Element aus einer Eingangswelle eine Prüfwelle und eine Referenzwelle erzeugt. Die Wellenfront der Prüfwelle kann durch das diffraktive optische Element derart an eine Solloberfläche des Testobjekts angepasst sein, dass diese an jedem Ort senkrecht auf die Sollform aufträfe und von dieser in sich zurückreflektiert werden würde. Mit Hilfe des durch Überlagerung der reflektierten Prüfwelle und der Referenzwelle gebildeten Interferogramms lassen sich dann Abweichungen von der Sollform bestimmen.

So wird beispielsweise in WO 2016/188620 A2 eine Messvorrichtung mit einem komplex kodierten computergenerierten Hologramm (CGH) als diffraktives optisches Element beschrieben. Das CGH erzeugt aus einer Eingangswelle eine auf die zu vermessende Testoberfläche gerichtete Prüfwelle mit einer zumindest teilweise an eine Sollform der Testoberfläche angepassten Wellenfront und eine Referenzwelle. Die Referenzwelle wird von einem reflektiven optischen Element zum CGH zurückreflektiert. Zusätzlich sei auf DE 10 2011 004 376 B3 verwiesen.

Bei derartigen vorbekannten Messvorrichtungen besteht die Problematik, dass beispielsweise aufgrund von Luftschlieren oder Gitterstrukturfehlern im CGH Messfehler auftreten können. Um die auf Luftschlieren zurückgehenden Messfehler zu minimieren, kann die Messvorrichtung im Hochvakuum betrieben werden. Zur Vermeidung der auf die Gitterstrukturfehler zurückgehenden Messfehler können Kalibrierverfahren zum Einsatz kommen. All diese Maßnahmen erhöhen jedoch den für die interferometrische Messung benötigten Aufwand bzw. die Komplexität der Messvorrichtung.

### Zugrunde liegende Aufgabe

Es ist eine Aufgabe der Erfindung, eine Messvorrichtung sowie ein Verfahren bereitzustellen, womit die vorgenannten Probleme gelöst werden, und insbesondere eine Eigenschaft einer Form einer Testoberfläche unter vertretbarem Aufwand mit sehr hoher Genauigkeit bestimmt werden kann.

### Erfindungsgemäße Lösung

Die vorgenannte Aufgabe kann erfindungsgemäß beispielsweise gelöst werden mit einer Messvorrichtung zur interferometrischen Bestimmung einer Eigenschaft einer Form einer Testoberfläche eines Prüfobjekts. Die Messvorrichtung umfasst eine Bestrahlungseinrichtung zum Erzeugen einer Eingangswelle sowie ein Aufspaltungsmodul, welches dazu konfiguriert ist, aus der Eingangswelle zwei Planwellen mit parallelen Ausbreitungsrichtungen, welche quer zu den Ausbreitungsrichtungen zueinander versetzt sind, zu erzeugen. Weiterhin umfasst die Messvorrichtung ein Wellenfrontanpassungsmodul zum Erzeugen von zwei Messwellen durch Anpassen der jeweiligen Wellenfront der zueinander versetzten Planwellen an eine Sollform der optischen Testoberfläche sowie einen Detektor zum Erfassen mindestens eines Interferogramms, welches durch Überlagerung der Messwellen nach deren Wechselwirkung mit der Testoberfläche erzeugt wird.

Die von der Messvorrichtung bestimmbare Eigenschaft der Form der Testoberfläche kann beispielsweise eine Ableitung der Testoberflächenform oder die Konfiguration der Testoberflächenform selbst bzw. die Form der Testoberfläche selbst sein, wie nachfolgend näher erläutert wird. Die zueinander versetzten Planwellen mit parallelen Ausbreitungsrichtungen können auch als gescherte Planwellen bezeichnet werden. Die Versetzung erfolgt in lateraler Richtung also quer zur Ausbreitungsrichtung der Eingangswelle. Das Ausmaß der Versetzung beträgt mindestens eine Wellenlänge der Eingangswelle, vorteilhafterweise zumindest ein Mehrfaches der Wellenlänge der Eingangswelle, d.h. bei einer Wellenlänge im sichtbaren Bereich, mindestens etwa 0,5 µm, insbesondere mindestens etwa 10 µm. Das Wellenfrontanpassungsmodul kann als diffraktives optisches Element, wie etwa als CGH oder als Linse, insbesondere als asphärische Linse, konfiguriert sein.

Durch die Erzeugung der beiden Messwellen mittels der gescherten Planwellen, verlaufen diese, welche die Funktion einer Prüfwelle und einer Referenzwelle erfüllen, nahezu im gleichen Strahlengang durch die Kavität zwischen dem Wellenfrontanpassungsmodul und der Testoberfläche. Damit beeinflussen mögliche Luftschlieren in der Kavität die beiden Messwellen im Wesentlichen auf gleiche Weise, wodurch das Interferogramm nicht oder nur geringfügig verändert wird. Durch die erfindungsgemäße Konfiguration kann daher die Messvorrichtung mit Normaldruck oder mit lediglich geringfügig verringertem Umgebungsdruck, wie etwa im Grobvakuum oder im Feinvakuum, betrieben werden. Ein Betrieb im Hochvakuum kann jedenfalls vermieden werden, wodurch der Aufwand zum Betreiben der Messvorrichtung verringert wird. Gemäß einer Ausführungsform kann auch eine bei Normaldruck geeignete laminare, homogene, gleichmäßige und stationäre Durchströmung der Kavität mittels einer speziell ausgestalteten Flowbox bewirkt werden. Unerwünschte Effekte durch eine solche reproduzierbare laminare Strömung können evtl. mit einer Kalibrierung gegen einen sogenannten goldenen Spiegel fast vollständig eliminiert werden.

Weiterhin wirken Fehler oder Abweichungen des Wellenfrontanpassungsmoduls in der erfindungsgemäßen Konfiguration der Messvorrichtung auf die gescherten Planwellen nahezu gleich. Daher wirken sich, im Fall der Konfiguration des Wellenfrontanpassungsmodules als diffraktives optisches Element, mögliche Gitterstrukturfehler bzw., im Fall der Konfiguration des Wellenfrontanpassungsmoduls als asphärische Linse, mögliche Linsenfehler nahezu gleich auf die beiden Messwellen aus. Auf aufwändige Kalibrierverfahren am Wellenfrontanpassungsmodul kann daher zumindest weitgehend verzichtet werden.

Die erfindungsgemäße Erzeugung paralleler Planwellen durch das Aufspaltungsmodul hat den Vorteil, dass die beiden Messwellen bis auf einen lateralen Versatz exakt identische Kopien voneinander sind, d.h. beide Messwellen besitzen exakt eine an die zu vermessende Oberfläche angepasste Wellenfront. Der Unterschied zwischen den beiden Messwellen besteht lediglich darin, dass bei einer Zerlegung der Messwellen in lokale Wellen und Kennzeichnung des Ursprungsorts in der Lichtquelle die lokalen Wellen mit gleichem Ursprung in der Lichtquelle bzw. mit identischer Kohärenz lateral in den beiden Messwellen versetzt sind.

Die beiden Messwellen laufen damit jeweils exakt in Autokollimation in sich zurück, somit treffen die Messwellen punktgenau auf dem Detektor aufeinander, auch wenn die (ideale oder nominelle) Form der Testoberfläche erheblich von der Form einer Planplatte abweicht. Damit werden Messartefakte mit einer hohen Verlässlichkeit vermieden und es kann bei Testobjekten mit einer beliebigen Oberflächenform, insbesondere einer stark von einer planen Fläche abweichenden Form, eine hohe Messgenauigkeit erzielt werden. Damit ist bereits von der Methodik her sichergestellt, dass schon im idealisierten Fall die beiden Messwellen exakt ineinander zurücklaufen und auf dem Detektor in idealer Weise interferieren, da die Wellen auf dem Detektor an identischen Punkten oder beinahe identischen Punkten ankommen.

Im Gegensatz dazu würde die Einstrahlung von Wellen, insbesondere von Planwellen oder auch expandierenden Wellen, mit nicht parallelen Ausbreitungsrichtungen, auf das Wellenfrontanpassungsmodul und/oder die Verwendung von Messwellen mit nicht parallelen Ausbreitungsrichtungen nicht zu einer exakten Autokollimation der Messwellen führen, was wiederum vermehrte Messartefakte nach sich ziehen würde.

Weiterhin ist eine Qualifizierung des Wellenfrontanpassungsmoduls, etwa in Bezug auf Materialinhomogenitäten des Wellenfrontanpassungsmoduls, gegen einen Planspiegel möglich, d.h. anstatt des Prüfobjekts wird bei der Qualifizierung, auch Kalibrierung bezeichnet, ein Planspiegel angeordnet.

Gemäß verschiedenen Ausführungsformen kann das Aufspaltungsmodul dazu konfiguriert sein, aus der Eingangswelle mehr als zwei Planwellen, beispielsweise mindestens drei oder mindestens fünf Planwellen, mit parallelen Ausbreitungsrichtungen, welche quer zueinander versetzt sind, zu erzeugen. In diesem Fall kann das Wellenfrontanpassungsmodul entsprechend zum Erzeugen von mehr als zwei Messwellen, beispielsweise von mindestens drei oder von mindestens fünf Messwellen, durch Anpassen der jeweiligen Wellenfront der zueinander versetzten Planwellen an eine Sollform der optischen Testoberfläche konfiguriert sein. Gemäß verschiedenen weiteren Ausführungsformen kann die Messvorrichtung auch mehr als ein Aufspaltungsmodul, beispielsweise mindestens zwei, mindestens drei oder mindestens fünf Aufspaltungsmodule, umfassen, welche jeweils dazu konfiguriert sind, aus der Eingangswelle zumindest zwei Planwellen mit parallelen Ausbreitungsrichtungen, welche quer zu den Ausbreitungsrichtungen zueinander versetzt sind, zu erzeugen. Gemäß verschiedener weiterer Ausführungsformen kann die Messvorrichtung auch mehr als ein Wellenfrontanpassungsmodul, beispielsweise mindestens zwei, mindestens drei oder mindestens fünf Wellenfrontanpassungsmodule, zum Erzeugen von jeweils mindestens zwei, mindestens drei oder mindestens fünf Messwellen durch Anpassen der jeweiligen Wellenfront der zueinander versetzten Planwellen an eine Sollform der optischen Testoberfläche umfassen.

Gemäß einer Ausführungsform ist die Messvorrichtung derart konfiguriert ist, dass die Messwellen nach deren Wechselwirkung mit der Testoberfläche vor Auftreffen auf den Detektor das Aufspaltungsmodul in umgekehrter Richtung wie die Strahlung der Eingangswelle durchlaufen und dabei die Messwellen aufeinander hin versetzt werden. Unter dem "aufeinander hin Versetzen" ist hier zu verstehen, dass die Messwellen nach der Versetzung näher zueinander liegen als davor. Insbesondere erfolgt die Versetzung derart, dass die Messwellen genau aufeinander liegen.

Gemäß einer weiteren Ausführungsform umfasst die Messvorrichtung eine Auswerteeinrichtung, welche dazu konfiguriert ist, unter Verwendung des mindestens einen erfassten Interferogramms mindestens eine Ableitung der Form der Testoberfläche zu ermitteln.

Gemäß einer weiteren Ausführungsform ist die Messvorrichtung dazu konfiguriert, eine Aufspaltungsrichtung der zwei Planwellen zu variieren. Die kann beispielsweise durch Drehen des Aufspaltungsmoduls erfolgen. Vorteilhafterweise werden daraus die Ableitungen der Testoberfläche in verschiedenen Richtungen ermittelt.

Gemäß einer weiteren Ausführungsform ist die Messvorrichtung dazu konfiguriert, einen lateralen Versatz der zwei Planwellen und damit die Größe des Ableitungsdifferentials bzw. die Ortsauflösung zu variieren. Es können sowohl Richtungen der Ableitungen als auch die Größe der Ableitungsdifferentiale und damit die Ortsauflösung verändert werden, wobei stets die Bedingung der Reflexion der Messwellen in Autokollimation am Spiegel erfüllt ist.

Gemäß einer weiteren Ausführungsform ist die Auswerteeinrichtung dazu konfiguriert, Ableitungen der Form der Testoberfläche an mehreren Orten der Testoberfläche zu ermitteln und die Form der Testoberfläche durch Integration der ermittelten Ableitungen zu bestimmen. Vorteilhafterweise werden bei der Integration Ableitungen in unterschiedlichen Richtungen an den einzelnen Orten der Testoberfläche verwendet. Unter der Aufspaltungsrichtung wird die Richtung verstanden, in der die Ausbreitungsrichtungen der beiden Messwellen zueinander versetzt sind.

Zusätzlich können auch Messungen mit verschiedener Größe in den Aufspaltungsdifferenzen durch unterschiedliche Größe des Strahlversatzes ausgenutzt werden und zusätzlich in der Verrechnung verwendet werden. Neben der Berücksichtigung von Ableitungen in unterschiedliche Richtungen ist es auch vorteilhaft, die um 180° gedrehten Ableitungsrichtungen und somit die Ableitungsdifferenzen mit entgegengesetztem Vorzeichen mitzunehmen, so dass man sowohl die linksals auch die rechtsseitigen Ableitungen in einer bestimmten Richtung an die Oberfläche erfasst.

Gemäß einer weiteren Ausführungsform umfasst das Aufspaltungsmodul zumindest ein Strahlrichtungsaufspaltelement, gemäß unterschiedlichen Ausführungsvarianten zumindest zwei, zumindest drei oder zumindest fünf Strahlrichtungsaufspaltelemente, sowie zumindest ein Richtungsangleichungselement, gemäß unterschiedlichen Ausführungsvarianten zumindest zwei, zumindest drei oder zumindest fünf Richtungsangleichungselemente, wobei das zumindest eine Strahlrichtungsaufspaltelement dazu konfiguriert ist, aus der Eingangswelle zumindest zwei Zwischenwellen, gemäß unterschiedlichen Ausführungsvarianten zumindest drei oder zumindest fünf Zwischenwellen, mit unterschiedlichen Ausbreitungsrichtungen zu erzeugen, und das Richtungsangleichungselement dazu konfiguriert ist, die zumindest zwei zueinander versetzten Planwellen durch aneinander Angleichen der Ausbreitungsrichtungen der zumindest zwei Zwischenwellen zu erzeugen.

Der Abstand zwischen dem Strahlrichtungsaufspaltelement und dem Richtungsangleichungselement liegt gemäß einer Ausführungsvariante in der Größenordnung des Abstands zwischen dem Wellenfrontanpassungsmodul und der Testoberfläche. Das Gleiche gilt für den Abstand zwischen dem Richtungsangleichungselement und dem Wellenfrontanpassungsmodul. Die Einstellung der Ortsauflösung kann durch die Wahl des Abstands zwischen dem Strahlrichtungsaufspaltelement und dem Richtungsangleichungselement erfolgen. Eine Abstandsvariation zwischen dem Strahlrichtungsaufspaltelement und dem Richtungsangleichungselement kann einerseits eine Variation des Versatzes der Messwellen, somit der Größe der Ableitungsdifferentiale und somit der Ortsauflösung bewirken. Andererseits kann die Abstandsvariation gleichzeitig für das Phasenschieben genutzt werden, wobei die Abstandsvariation typischerweise geringer sein wird als bei Einstellung der Ortsauflösung.

Gemäß einer weiteren Ausführungsform ist das Strahlrichtungsaufspaltungselement und/oder das Richtungsangleichungselement als diffraktives optisches Element, insbesondere als CGH, konfiguriert. Gemäß einer Ausführungsvariante werden die CGHs zur Vermeidung von Reflexen gegeneinander verkippt.

Gemäß einer weiteren Ausführungsform ist das Strahlaufspaltungselement und/oder das Richtungsangleichungselement jeweils dazu konfiguriert, eingehende Strahlung lediglich in die nullte und betragsmäßig erste Beugungsordnung, beispielsweise in die 0. und die +1. Beugungsordnung, zu beugen.

Gemäß einer weiteren Ausführungsform sind das Strahlaufspaltungselement und/oder das Richtungsangleichungselement jeweils dazu konfiguriert, eingehende Strahlung lediglich in die +1. und die -1. Beugungsordnung zu beugen.

Gemäß einer weiteren Ausführungsform sind das Strahlrichtungsaufspaltungselement und das Richtungsangleichungselement zueinander invers konfigurierte diffraktive optische Elemente.

Gemäß einer weiteren Ausführungsform ist das Strahlrichtungsaufspaltelement und/oder das Richtungsangleichungselement als Scherprisma konfiguriert. Hierzu kommen z.B. ein Nomarski-Prisma, ein Wollaston-Prisma oder ein Rochon-Prisma in Frage.

Gemäß einer weiteren Ausführungsform weist die Messvorrichtung weiterhin ein variables Phasenverzögerungselement (auch Phasenretarder bezeichnet) zum Phasenschieben auf. Dieses kann beispielsweise einen Flüssigkristall enthalten. Das Phasenverzögerungselement bewirkt unterschiedliche Phasenretardierung für Wellenfronten unterschiedlicher Polarisation, damit bewirkt dieses für die beiden Messwellen, je nach Anordnung des Phasenverzögerungselements im Strahlengang, bereits für die beiden Zwischenwellen unterschiedliche Phasenretardierung.

Gemäß einer weiteren Ausführungsform ist das Richtungsangleichungselement als Scherprisma konfiguriert, welches gegenüber einem als das Strahlrichtungsaufspaltelement dienenden Scherprisma gleicher Art in umgekehrter Orientierung angeordnet ist.

Gemäß einer weiteren Ausführungsform ist das Strahlrichtungsaufspaltelement dazu konfiguriert, die zweite Zwischenwelle von der Eingangswelle abzuspalten, wobei die erste Zwischenwelle ein das Strahlrichtungsaufspaltelement ohne Ablenkung durchlaufender Anteil der Eingangswelle ist. Das Strahlrichtungsaufspaltelement kann dazu beispielsweise als Rochon-Prisma oder als CGH konfiguriert sein.

Gemäß einer weiteren Ausführungsform sind die Ausbreitungsrichtungen der Zwischenwellen symmetrisch zur Ausbreitungsrichtung der Eingangswelle orientiert.

Gemäß einer weiteren Ausführungsform ist die Messvorrichtung dazu konfiguriert, einen Abstand zwischen dem Strahlrichtungsaufspaltelement und dem Richtungsangleichungselement zu verändern. Die Veränderung des Abstands kann dazu dienen, die relative Phasenlage zwischen den beiden zueinander versetzten Planwellen zu verändern. Dies dient dem sogenannten Phasenschieben. Bei diffraktiven optischen Elementen, insbesondere CGHs, ist ein Phasenschieben auch durch laterales Verschieben des diffraktiven optischen Elements möglich. Damit ist bei Ausführung des Strahlrichtungsaufspaltelements und des Richtungsangleichnungselements jeweils als diffraktives optisches Element Phasenschieben auch durch laterales Verschieben entweder des Strahlrichtungsaufspaltelements oder des Richtungsangleichungselements realisierbar. Die Veränderung des Abstands zwischen dem Strahlrichtungsaufspaltelement und dem Richtungsangleichungselement kann auch dem Zweck dienen, die Größe der Ableitungsdifferentiale und damit die Ortsauflösung zu variieren.

Die Ausführung des Strahlrichtungsaufspaltelements und/oder des Richtungsangleichungselements in Form eines CGHs hat den Vorteil, dass zusätzliche diffraktive Hilfsstrukturen auf dem CGH vorhanden sein können (z.B. Cateye- oder Littrow-Strukturen), die vorteilhaft sind für die Justage der beiden Elemente des Aufspaltungsmoduls zueinander oder relativ zum Interferometer (gesamte Optik vor Aufspaltungsmodul, also Beleuchtungs- und Abbildungseinheit) als auch zur Justage des Wellenfrontanpassungsmoduls gegen das Aufspaltungsmodul bzw. das gesamte Interferometer.

Gemäß einer weiteren Ausführungsform umfasst das Aufspaltungsmodul eine Scherplatte. Diese ist vorzugsweise parallelseitig, kann aber auch keilförmig ausgebildet sein. Die Scherplatte ist jedenfalls derart konfiguriert, dass eine erste Ausgangswelle aus dem Licht der Eingangswelle erzeugt wird, welche diese an der der Eintrittsseite gegenüber liegenden Austrittsseite der Scherplatte ohne weitere Reflexion wieder verlässt, die zweite Ausgangswelle wird aus dem Licht des Eingangsstrahls erzeugt, welches vor dem Austritt auf der Austrittsseite zunächst an der Austrittsseite und der Eintrittsseite der Scherplatte hin und her reflektiert wird. Das Phasenschieben kann beispielsweise durch Verkippen der Scherplatte erfolgen. Die Verkippung der Scherplatte führt dazu, dass sich die Pfadlängendifferenz der beiden Strahlen in der Platte verändert.

Gemäß einer weiteren Ausführungsform ist die Messvorrichtung dazu konfiguriert, einen Spiegel für die EUV-Mikrolithographie, insbesondere einen Spiegel eines Beleuchtungssystems oder eines Projektionsobjektivs einer EUV-Projektionsbelichtungsanlage, als Prüfobjekt zu vermessen.

Die vorgenannte Aufgabe kann weiterhin beispielsweise gelöst werden mit einem Verfahren zur interferometrischen Bestimmung einer Eigenschaft einer Form einer Testoberfläche eines Prüfobjekts. Das Verfahren umfasst ein Erzeugen von zwei Planwellen mit zwei parallelen Ausbreitungsrichtungen, welche quer zu den Ausbreitungsrichtungen versetzt sind, durch Aufspalten einer Eingangswelle. Weiterhin werden zwei Messwellen aus den Planwellen durch Anpassen der jeweiligen Wellenfront der zueinander versetzten Planwellen an eine Sollform der optischen Testoberfläche erzeugt sowie mindestens ein Interferogramm wird durch Überlagerung der Messwellen nach deren Wechselwirkung mit der Testoberfläche erzeugt und das Interferogramm wird erfasst.

Die bezüglich der vorstehend aufgeführten Ausführungsformen, Ausführungsbeispiele bzw. Ausführungsvarianten, etc. der erfindungsgemäßen Messvorrichtung angegebenen Merkmale können entsprechend auf das erfindungsgemäße Verfahren übertragen werden und umgekehrt. Diese und andere Merkmale der erfindungsgemäßen Ausführungsformen werden in der Figurenbeschreibung und den Ansprüchen erläutert. Die einzelnen Merkmale können entweder separat oder in Kombination als Ausführungsformen der Erfindung verwirklicht werden. Weiterhin können sie vorteilhafte Ausführungsformen beschreiben, die selbstständig schutzfähig sind und deren Schutz ggf. erst während oder nach Anhängigkeit der Anmeldung beansprucht wird.

### Kurzbeschreibung der Zeichnungen

Die vorstehenden, sowie weitere vorteilhafte Merkmale der Erfindung werden in der nachfolgenden detaillierten Beschreibung beispielhafter erfindungsgemäßer Ausführungsbeispiele bzw. Ausführungsformen oder Ausführungsvarianten unter Bezugnahme auf die beigefügten schematischen Zeichnungen veranschaulicht. Es zeigen:
Fig. 1 ein Ausführungsbeispiel einer Messvorrichtung zur interferometrischen Bestimmung der Form einer Testoberfläche eines Prüfobjekts mit einem Aufspaltungsmodul aus zwei diffraktiven optischen Elementen zum Erzeugen von zwei parallelen Planwellen sowie einem Wellenfrontanpassungsmodul zum Erzeugen von zwei Messwellen aus den Planwellen,
Fig. 2 ein Ausführungsbeispiel einer Anordnung zur Qualifizierung bzw. Kalibrierung des Wellenfrontanpassungsmoduls gemäß Fig. 1,
Fig. 3 ein Ausführungsbeispiel einer Anordnung zur Qualifizierung bzw. Kalibrierung des Interferometers einschließlich des Aufspaltungsmoduls der Messvorrichtung gemäß Fig. 1,
Fig. 4 ein weiteres Ausführungsbeispiel einer Messvorrichtung zur interferometrischen Bestimmung der Form einer Testoberfläche eines Prüfobjekts mit gegenüber Fig. 1 anders gestalteten diffraktiven optischen Elementen des Aufspaltungsmoduls,
Fig. 5 ein weiteres Ausführungsbeispiel einer Messvorrichtung zur interferometrischen Bestimmung der Form einer Testoberfläche eines Prüfobjekts, bei dem die diffraktiven optischen Elemente des Aufspaltungsmoduls verkippt angeordnet sind,
Fig. 6 ein weiteres Ausführungsbeispiel einer Messvorrichtung zur interferometrischen Bestimmung der Form einer Testoberfläche eines Prüfobjekts, bei dem eines der beiden diffraktiven optischen Elemente des Aufspaltungsmoduls durch ein Scherprisma gebildet wird,
Fig. 7 ein weiteres Ausführungsbeispiel einer Messvorrichtung zur interferometrischen Bestimmung der Form einer Testoberfläche eines Prüfobjekts, bei dem beide diffraktive optische Elemente des Aufspaltungsmoduls durch Scherprismen gebildet werden,
Fig. 8 ein weiteres Ausführungsbeispiel einer Messvorrichtung zur interferometrischen Bestimmung der Form einer Testoberfläche eines Prüfobjekts, bei dem eines der beiden diffraktiven optischen Elemente des Aufspaltungsmoduls als Rochon-Prisma konfiguriert ist,
Fig. 9 ein weiteres Ausführungsbeispiel einer Messvorrichtung zur interferometrischen Bestimmung der Form einer Testoberfläche eines Prüfobjekts, bei dem das Aufspaltungsmodul durch eine Scherplatte gebildet wird, sowie
Fig. 10 ein weiteres Ausführungsbeispiel einer Messvorrichtung zur interferometrischen Bestimmung der Form einer Testoberfläche eines Prüfobjekts, bei dem das Wellenfrontanpassungsmodul durch eine Linse gebildet wird.

### Detaillierte Beschreibung erfindungsgemäßer Ausführungsbeispiele

In den nachstehend beschriebenen Ausführungsbeispielen bzw. Ausführungsformen oder Ausführungsvarianten sind funktionell oder strukturell einander ähnliche Elemente soweit wie möglich mit den gleichen oder ähnlichen Bezugszeichen versehen. Daher sollte zum Verständnis der Merkmale der einzelnen Elemente eines bestimmten Ausführungsbeispiels auf die Beschreibung anderer Ausführungsbeispiele oder die allgemeine Beschreibung der Erfindung Bezug genommen werden.

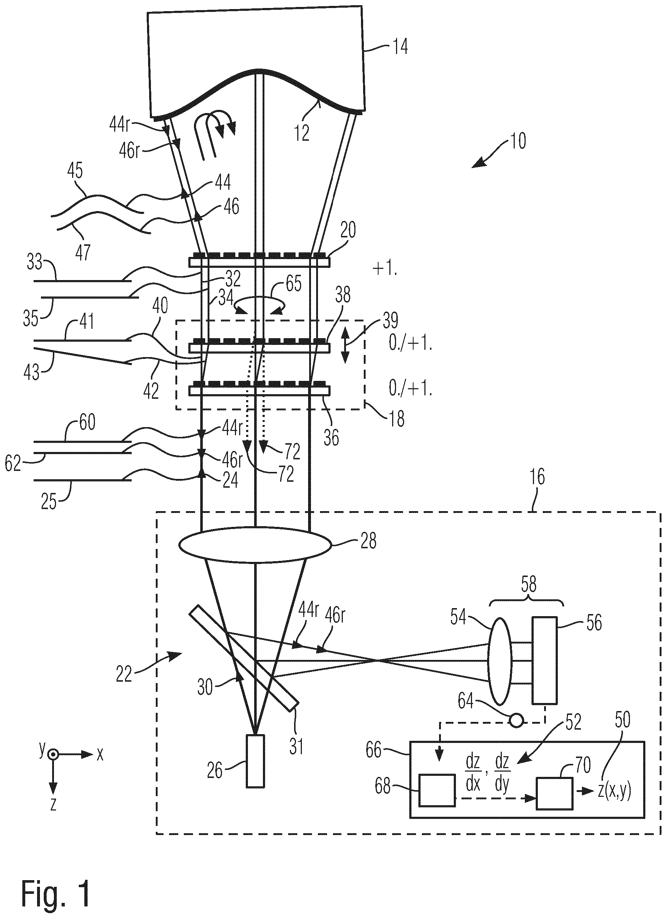

Zur Erleichterung der Beschreibung ist in der Zeichnung ein kartesisches xyz-Koordinatensystem angegeben, aus dem sich die jeweilige Lagebeziehung der in den Figuren dargestellten Komponenten ergibt. In Fig. 1 verläuft die y-Richtung senkrecht aus der Zeichenebene heraus, die x-Richtung nach rechts und die z-Richtung nach unten.

In Fig. 1 wird schematisch ein Ausführungsbeispiel 10 einer Messvorrichtung zur interferometrischen Bestimmung einer Eigenschaft einer Form z(x,y) (Bezugszeichen 50) einer Testoberfläche 12 eines Prüfobjekts 14 dargestellt. Bei der bestimmten Eigenschaft kann es sich um eine oder mehrere Ableitungen dz/dx bzw. dz/dy (Bezugszeichen 52) der Form z(x,y) der Testoberfläche 12 oder auch um die Form 50 der Testoberfläche 12 selbst handeln. Die Form der Testoberfläche 12 bzw. insbesondere auch eine Sollform der Testoberfläche 12, kann nicht-sphärisch sein, insbesondere kann diese als asphärisch oder als Freiformfläche gestaltet sein. Unter einer asphärischen Fläche ist eine rotationssymmetrische Fläche zu verstehen, die von jeder beliebigen Sphäre um mindestens 0,05 mm, insbesondere um mindestens 0,1 mm, um mindestens 1 mm oder um mindestens 5 mm abweicht. Eine derartige asphärische Fläche wird in diesem Text auch als rotationssymmetrische Asphäre oder einfach nur als Asphäre bezeichnet. Unter einer Freiformfläche ist eine Form mit einer Abweichung von jeder beliebigen rotationssymmetrischen Asphäre von mindestens 5 µm, insbesondere mindestens 10 µm, zu verstehen. Weiterhin weicht die Freiformfläche von jeder beliebigen Sphäre um mindestens 0,05 mm, insbesondere um mindestens 0,1 mm, um mindestens 1 mm oder um mindestens 5 mm ab.

Die Messvorrichtung 10 eignet sich insbesondere zur hochgenauen Vermessung der optischen Oberfläche eines asphärischen Spiegels oder eines Freiform-Spiegels für die Mikrolithographie mit einer Belichtungsstrahlung im extrem ultravioletten (EUV-) Spektralbereich. Der EUV-Wellenlängenbereich erstreckt sich auf Wellenlängen unterhalb von 100 nm und betrifft insbesondere Wellenlängen von etwa 13,5 nm oder etwa 6,8 nm. Zur Fehlerreduzierung oder Fehlerkorrektur ist bei solchen optischen Oberflächen eine Formbestimmung bis in den Subnanometerbereich hinein erforderlich. Die Messvorrichtung 10 eignet sich aber auch zur Vermessung der Oberfläche von vielen anderen Objekten.

Die Messvorrichtung 10 umfasst eine Strahlerzeugungs- und Auswerteeinrichtung 16, ein Aufspaltungsmodul 18, sowie ein als diffraktives optisches Element 20 konfiguriertes Wellenfrontanpassungsmodul. Die Strahlerzeugungs- und Auswerteeinrichtung 16 umfasst eine Bestrahlungseinrichtung 22, welche zum Erzeugen einer Eingangswelle 24 dient und eine Strahlungsquelle 26 sowie eine Kollimatorlinse 28 aufweist.

Die Strahlungsquelle 26 erzeugt eine zur Interferenz ausreichend kohärente Messstrahlung 30 in Gestalt einer expandierenden Welle. Gemäß einem Ausführungsbeispiel ist die Strahlungsquelle 26 ein Helium-Neon-Laser mit einer Wellenlänge von ungefähr 633 nm. Die Messstrahlung 30 kann auch eine andere Wellenlänge im sichtbaren oder nicht-sichtbaren Wellenlängenbereich elektromagnetischer Strahlung aufweisen. Die von der Strahlungsquelle 26 erzeugte Messstrahlung 30 durchläuft zunächst einen Strahlenteiler 31 und daraufhin die Kollimatorlinse 28.

Die von der Bestrahlungseinrichtung 22 erzeugte Eingangswelle 24 ist eine Planwelle, d.h. sie weist eine ebene Wellenfront 25 auf. Die Eingangswelle 24 trifft auf das Aufspaltungsmodul 18, welches dazu konfiguriert ist, die Eingangswelle 24 in zwei Planwellen 32 und 34, d.h. Wellen mit einer jeweils ebenen Wellenfront 33 bzw. 35, mit parallelen Ausbreitungsrichtungen aufzuspalten. Mit anderen Worten sind die Strahlengänge der Planwellen 32 und 34 quer zu ihrer Ausbreitungsrichtung in einer Aufspaltungsrichtung zueinander versetzt. Im Ausführungsbeispiel gemäß Fig. 1 erfolgt die Aufspaltung durch Abspalten der Planwelle 34 von der Eingangswelle 24, während die Planwelle 32 aus dem verbleibenden Strahlungsanteil der Eingangswelle 24 gebildet wird. Die in Fig. 1 dargestellte Aufspaltungsrichtung ist die x-Richtung.

Im Ausführungsbeispiel gemäß Fig. 1 umfasst das Aufspaltungsmodul 18 ein Strahlrichtungsaufspaltelement in Gestalt eines als CGH ausgebildeten diffraktiven optischen Elements 36 sowie ein Richtungsangleichungselement ebenfalls in Gestalt eines als CGH ausgebildeten diffraktiven optischen Elements 38. Das Strahlrichtungsaufspaltelement ist dazu konfiguriert, aus der Eingangswelle 24 zwei Zwischenwellen 40 und 42 mit unterschiedlichen Ausbreitungsrichtungen zu erzeugen. Die Zwischenwellen 40 und 42 weisen zueinander verkippte ebene Wellenfronten 41 und 43 auf. Die Erzeugung der Zwischenwellen 40 und 42 erfolgt in dem Ausführungsbeispiel gemäß Fig. 1 durch Abspalten der Zwischenwelle 42 mit einer leicht verkippten Ausbreitungsrichtung aus der Eingangswelle 24, während die Zwischenwelle 40 aus dem verbleibenden Strahlungsanteil der Eingangswelle 24 gebildet wird. Dazu ist das diffraktive optische Element 36 dazu konfiguriert, eine 0. und eine 1. Beugungsordnung der Eingangswelle 24 im Durchtritt zu erzeugen, wobei die 0. Beugungsordnung als die Zwischenwelle 40 und die 1. Beugungsordnung als die Zwischenwelle 42 fungiert.

Das Richtungsangleichungselement 38 ist dazu konfiguriert, die Ausbreitungsrichtungen der beiden Zwischenwellen 40 und 42 aneinander anzugleichen und damit die zwei zueinander versetzten Planwellen 32 und 34 zu erzeugen. Im Ausführungsbeispiel gemäß Fig. 1 erfolgt dies durch leichtes Ablenken der Zwischenwelle 42 und zwar so, dass diese, nun in Gestalt der Planwelle 32 die gleiche Ausbreitungsrichtung wie die Zwischenwelle 40 erhält. Dazu ist das diffraktive optische Element 38 dazu konfiguriert, jeweils eine 0. und eine 1. Beugungsordnung der Zwischenwellen 40 und 42 im Durchtritt zu erzeugen, wobei die 0. Beugungsordnung der Zwischenwelle 40 als die Planwelle 32 und die 1. Beugungsordnung der Zwischenwelle 42 als die Planwelle 34 fungiert. Mit anderen Worten sind die beiden diffraktiven optischen Element 36 und 38 invers zueinander konfiguriert.

Das Wellenfrontanpassungsmodul in Gestalt des beispielsweise als CGH ausgebildeten diffraktiven optischen Elements 20 ist dazu konfiguriert die jeweilige Wellenfront der Planwellen 32 und 34 durch Beugung in 1. Beugungsordnung an eine Sollform der Testoberfläche 12 anzupassen und damit beispielsweise zwei Messwellen 44 und 46 mit jeweils nicht-sphärischen Wellenfronten 45 und 47 zu erzeugen. Durch die Anpassung der Wellenfronten 45 und 47 an die Sollform träfen die Messwellen 44 und 46 an jedem Ort der Testoberfläche 12 senkrecht auf und würden genau in sich zurückreflektiert werden, wenn die Testoberfläche exakt der Sollform entsprechen würde. Abweichungen von der Sollform führen bei der nachstehend genauer beschriebenen Überlagerung der reflektierten Messwellen 44r und 46r, d.h. der Messwellen 44 und 46 nach deren Wechselwirkung mit der Testoberfläche 12 zu einem Interferenzmuster, mit dem sich die reale Oberflächenform hochgenau bestimmen lässt.

Die reflektierten Messwellen 44r und 46r durchlaufen das als Wellenfrontanpassungsmodul fungierende diffraktive optische Element 20 und werden dabei wieder in zueinander versetzt, parallel verlaufende Wellen umgewandelt, die sich lediglich um durch die Abweichung der Testoberfläche 12 von deren Sollform bewirkte Abweichungen von den Planwellen 32 und 34 unterscheiden. Die reflektierten Messwellen 44r und 46r verlaufen daraufhin in den Strahlengängen der Zwischenwellen 40 und 42 sowie der Eingangswelle 24, allerdings in umgekehrter Richtung wie die Strahlung der Eingangswelle 24. Beim Durchlaufen des Aufspaltungsmoduls 18 in umgekehrter Richtung werden die Messwellen 44r und 46r aufeinander zu versetzt, und zwar so, dass die Messwellen 44r und 46r genau aufeinander liegen.

Die beim Durchlaufen des diffraktiven optischen Elements 38 in 0. Beugungsordnung der Messwelle 44r erzeugte Welle wird im weiteren Strahlenverlauf weiterhin als Messwelle 44r bezeichnet, während die 1. Beugungsordnung der Messwelle 44r eine nicht genutzte Überschusswelle 72 darstellt. Analog wird die beim Durchlaufen des diffraktiven optischen Elements 38 in 1. Beugungsordnung der Messwelle 46r erzeugte Welle im weiteren Strahlenverlauf weiterhin als Messwelle 46r bezeichnet, während die 0. Beugungsordnung der Messwelle 46r eine ebenfalls nicht genutzte Überschusswelle 72 darstellt. Analog werden an dem diffraktiven optischen Element 36 nicht genutzte Überschusswellen 72 erzeugt.

Derartige Überschusswellen können auch auf dem Hinweg entstehen, wenn die Eingangswelle 24 das diffraktive optische Element 36 und das diffraktive optische Element 38 durchläuft. Gemäß einer Ausführungsform können die diffraktiven optischen Elemente 36 und 38 als Blaze-Gitter ausgeführt werden, sodass die unerwünschten Beugungsordnungen in ihren Effizienzen stark unterdrückt sind.

Damit verlaufen die reflektierten Messwellen 44r und 46r nach dem umgekehrten Durchlaufen des Aufspaltungsmoduls 18 im gleichen Strahlengang, d.h. sie sind nicht mehr zueinander versetzt, und weisen Wellenfronten 60 und 62 auf, die sich lediglich um die durch die Abweichung der Testoberfläche 12 von deren Sollform bewirkten Abweichungen von ebenen Wellenfronten unterscheiden. Da die Messwellen 44 und 46 leicht zueinander versetzt auf die Testoberfläche 12 auftreffen, machen sich diese Abweichungen der Testoberfläche 12 durch Phasenabweichungen der Wellenfronten 60 und 62 bemerkbar.

Die reflektierten Messwellen 44r und 46r werden in der Strahlerzeugungs- und Auswerteeinrichtung 16 nach Durchlaufen der Kollimatorlinse 28 von dem Strahlenteiler 31 in Richtung einer Kamera 58 abgelenkt. Beide reflektierten Messwellen 44r und 46r durchlaufen ein Okular 54 und treffen auf einen Detektor 56 der Kamera 58. Der Detektor 56 umfasst zum Beispiel einen CCD-Sensor und erfasst mehrere durch die Überlagerung der reflektierten Messwellen 44r und 46r erzeugte Interferogramme 64. Die vorstehend erwähnten Überschusswellen 72 weisen einen derartigen Strahlweg auf, dass deren Strahlung nichts oder nur unwesentlich zu den Interferogrammen 64 beitragen, da diese Überschusswellen nicht mehr an denselben Orten wie die Nutzwellen auf der Kamera 58 auftreffen und daher die Bedingung für eine konstruktive Interferenz nicht mehr gegeben ist. Die lokalen Überschusswellen und die lokalen Nutzwellen zum selben Quellpunkt kommen auf der Kamera an unterschiedlichen Orten an, oder - andersherum ausgedrückt - die Überschusswellen und die Nutzwellen sind an einem Punkt auf der Kamera 58 nicht mehr vollständig kohärent zueinander, da sie von unterschiedlichen Quellorten stammen.

Die erfassten Interferogramme 64 werden durch Veränderung der relativen Phasenlage zwischen den beiden zueinander versetzten Planwellen 32 und 34 bzw. den beiden Messwellen 44 und 46, das sogenannte Phasenschieben, erzeugt. Dies erfolgt in der Ausführungsform gemäß Fig. 1 durch Veränderung des Abstands zwischen dem als Richtungsangleichungselement dienenden diffraktiven optischen Element 38 und dem als Strahlrichtungsaufspaltelement dienenden diffraktiven optischen Element 36. Die Abstandsveränderung wird dabei durch axiales Verschieben des diffraktiven optischen Elements 38 bewirkt. Dazu ist eine mit einem Doppelpfeil 39 veranschaulichte Verschiebeeinrichtung vorgesehen. Alternativ kann auch das diffraktive optische Element 36 axial verschoben werden. Gemäß anderen Ausführungsformen kann das Phasenschieben auch durch Variation der Wellenlänge λ der Messstrahlung 30 oder andere Maßnahmen erfolgen. Das Phasenschieben kann auch durch eine laterale Verschiebung des als diffraktives optisches Element 36 ausgebildeten Strahlrichtungsaufspaltelements oder des als diffraktives optisches Element 38 ausgebildeten Richtungsangleichungselements erfolgen.

Weiterhin ist die Messvorrichtung 10 dazu konfiguriert, die Aufspaltungsrichtung der beiden Planwellen 32 und 34 zu variieren. Dazu ist in der Ausführungsform gemäß Fig. 1 das Aufspaltungsmodul 18 axial, d.h. in Bezug auf die Einstrahlrichtung der Eingangswelle 24, drehbar gelagert. So wird gemäß einer Ausführungsvariante nach der Erfassung der Interferogramme 64 (nachstehend auch als erster Satz an Interferogrammen bezeichnet) in der in Fig. 1 gezeigten Stellung, in der die Aufspaltungsrichtung in x-Richtung orientiert ist, das Aufspaltungsmodul 18 um 90° gedreht. Dazu ist eine mit einem Doppelpfeil veranschaulichte Dreheinrichtung 65 vorgesehen. Damit wird die Aufspaltungsrichtung in y-Richtung angeordnet. In dieser Anordnung wird ein zweiter Satz an Interferogrammen 64 unter entsprechendem Phasenschieben ermittelt.

Beide Sätze an erfassten Interferogrammen 64 werden an eine Auswerteeinrichtung 66 übermittelt, welche ein erstes Auswertemodul 68 sowie ein zweites Auswertemodul 70 umfasst. Im ersten Auswertemodul 68 werden aus den Interferogrammen 64 Ableitungen dz/dx und dz/dy (Bezugszeichen 52) der Form 50 der Testoberfläche 12 bestimmt. Dabei dient der erste Satz an Interferogrammen 64, welche für die Aufspaltung in x-Richtung ermittelt wurden, zur Bestimmung der Ableitungen dz/dx und der zweite Satz an Interferogrammen 64, welche für die Aufspaltung in y-Richtung ermittelt wurden, zur Bestimmung der Ableitungen dz/dy.

Die Ableitungen 52 werden an den verschiedenen Koordinatenpunkten (x,y) der Testoberfläche 12, also an mehreren Orten der Testoberfläche 12 ermittelt. Im zweiten Auswertemodul 70 wird die Form 50 der Testoberfläche 12 durch Integration der ermittelten Ableitungen dz/dx und dz/dy bestimmt. Die Messvorrichtung 10 wird in Luft mit Normaldruck betrieben. Dies ist möglich, da die interferierenden Wellen, nämlich die Messwellen 44r und 46r beinahe denselben Strahlengang durchlaufen und daher Luftverwirbelungen bzw. Luftdruckschwankungen kaum einen Einfluss auf die Messgenauigkeit der Messvorrichtung 10 haben. Auf eine Anordnung der Messvorrichtung 10 in Vakuum, insbesondere in Hochvakuum, kann damit verzichtet werden.

Die Größe der Strahlaufspaltung der Zwischenwellen 40 und 42 und somit die Ortsauflösung der Formvermessung kann durch Änderung des Abstands zwischen den diffraktiven optischen Elementen 36 und 38 variiert werden.

Ein weiterer Vorteil der Messvorrichtung 10 gemäß Fig. 1 besteht darin, dass die zu prüfende Testoberfläche 12 gleichzeitig auch als Referenzfläche dient und somit kein zusätzliches optisches Element als Referenzspiegel benötigt wird. Damit entfällt der Aufwand für die Herstellung und Prüfung eines derartigen Referenzspiegels. Außerdem entfallen mögliche Fehlereinflüsse auf die Messung. In anderen Prüfoptiken mit einem Referenz- oder Fizeau-Element nehmen die Prüf- und Referenzwelle stark unterschiedliche Lichtpfade und erfahren daher auch große unterschiedliche Fehler. Weiterhin ermöglicht die Nutzung der Testoberfläche 12 als Referenzfläche einen ähnlich großen Kontrast unabhängig von der Reflektivität des Prüfspiegels.

Ein weiterer Vorteil der Messvorrichtung 10 gemäß Fig. 1 besteht darin, dass der Kontrast nahezu unabhängig von einer Reflektivität eines zu vermessenden Spiegels ist, insbesondere nahezu unabhängig davon, ob der Spiegel beschichtet ist oder nicht.

Ein weiterer Vorteil der Messvorrichtung 10 gemäß Fig. 1 besteht darin, dass neben einer kohärenten insbesondere auch eine inkohärente Lichtquelle verwendet werden kann mit dem Vorteil, dass störende Reflexe im Interferogramm stark unterdrückt sind.

Weiterhin ist zu erwähnen, dass bei einem als diffraktives optisches Element bzw. CGH ausgestalteten Wellenfrontanpassungsmodul 20 dieses ein diffraktives optisches Element mit nur einer einkodierten Funktionalität ist und dass die Prüf- und Referenzwelle dieses Modul nahezu gleich sehen, so dass dieses diffraktive optische Element im Normalfall weniger Herstellungsfehler aufweist und man auf eine spezielle zusätzliche externe Qualifizierung als auch auf eine spezielle im Prüfaufbau mit zusätzlichen Spiegel durchzuführende Kalibriermessung des Moduls verzichten kann.

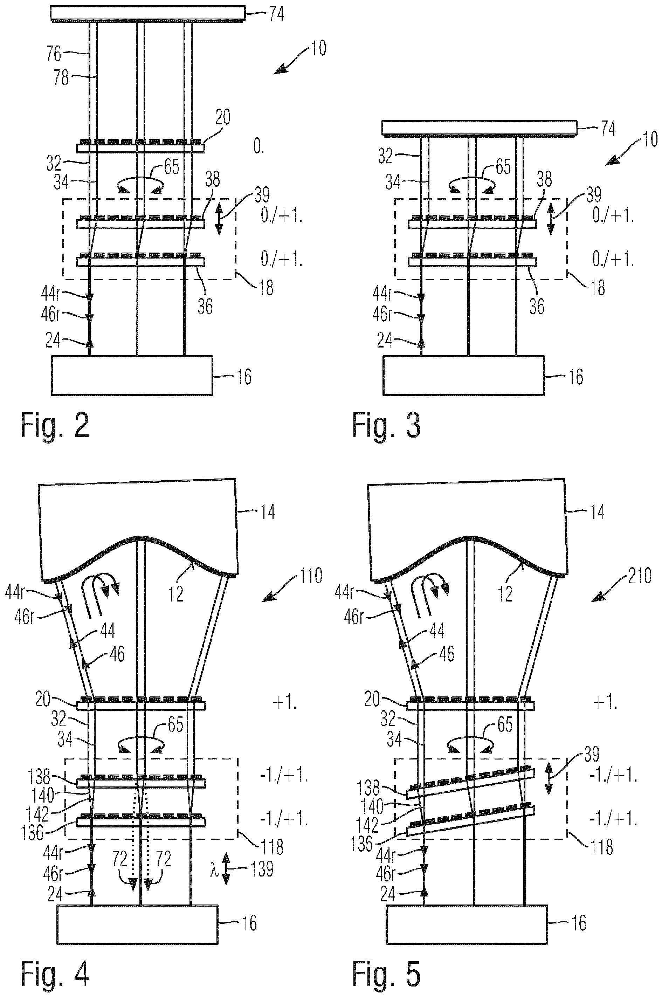

Fig. 2 veranschaulicht eine Qualifizierung bzw. Kalibrierung des als Wellenfrontanpassungsmodul fungierenden diffraktiven optischen Elements 20. Dazu wird anstelle des Prüfobjekts 14 ein planer Kalibrierspiegel 74 angeordnet. Die sich durch Überlagerung der in 0. Beugungsordnung das diffraktive optische Element 20 durchlaufenden Planwellen 32 und 34, hier Kalibrierwellen 76 und 78 bezeichnet, auf dem Detektor 56 ergebenden Interferogramme werden ausgewertet. Daraus lassen sich beispielsweise Materialinhomogenitäten im Substrat des diffraktiven optischen Elements 20 bestimmen.

Fig. 3 veranschaulicht eine Qualifizierung bzw. Kalibrierung des Interferometers einschließlich des Aufspaltungsmoduls 18. Dazu wird der plane Kalibrierspiegel 74 anstelle des diffraktiven optischen Elements 20 angeordnet. Die sich durch Überlagerung der am Kalibrierspiegel 74 reflektierten Planwellen 32 und 34 auf dem Detektor 16 ergebenden Interferogramme werden ausgewertet. Daraus lassen sich beispielsweise Materialinhomogenitäten in den Substraten der diffraktiven optischen Elemente 36 und 38 oder andere Abweichungen im Strahlengang des Interferometers bestimmen. Unter Berücksichtigung der Qualifizierung gemäß Fig. 3 kann mittels der Qualifizierung gemäß Fig. 2 der Fehlereinfluss des Wellenfrontanpassungsmoduls von nahezu allen anderen Fehlerbeiträgen im Interferogramm separiert werden.

In Fig. 4 wird ein weiteres Ausführungsbeispiel 110 einer Messvorrichtung zur interferometrischen Bestimmung einer Eigenschaft einer Form einer Testoberfläche 12 eines Prüfobjekts 14 dargestellt. Die Messvorrichtung 110 unterscheidet sich von der Messvorrichtung 10 gemäß Fig. 1 lediglich in der Konfiguration des Aufspaltungsmoduls 18, welches in Fig. 4 mit dem Bezugszeichen 118 bezeichnet ist, sowie in der Methode des Phasenschiebens. Die Strahlerzeugungs- und Auswerteeinrichtung 16 ist in Fig. 4 lediglich schematisch dargestellt.

Das Aufspaltungsmodul 118 umfasst ebenfalls als Strahlrichtungsaufspaltelement bzw. Richtungsangleichungselement konfigurierte diffraktive optische Elemente, welche mit den Bezugszeichen 136 und 138 bezeichnet sind. Die diffraktiven optischen Elemente 136 und 138 gemäß Fig. 4 unterscheiden sich dahingehend von den diffraktiven optischen Elementen 36 und 38, dass sie dazu konfiguriert sind, anstatt in 0./1. Beugungsordnung in 1. Beugungsordnung betrieben zu werden. Das heißt, Zwischenwellen 140 und 142 werden an dem diffraktiven optischen Element 136 in -1. und +1. Beugungsordnung der Eingangswelle 24 im Durchtritt erzeugt. Damit sind die Ausbreitungsrichtungen der Zwischenwellen 140 und 142 symmetrisch zur Ausbreitungsrichtung der Eingangswelle 24 orientiert. Weiterhin dient dann die 1. Beugungsordnung der Zwischenwelle 140 als Planwelle 32 und die 1. Beugungsordnung der Zwischenwelle 142 dient als Planwelle 34.

In Fig. 5 wird ein weiteres Ausführungsbeispiel 210 einer Messvorrichtung zur interferometrischen Bestimmung einer Eigenschaft einer Form einer Testoberfläche 12 eines Prüfobjekts 14 dargestellt. Die Messvorrichtung 210 unterscheidet sich von der Messvorrichtung 110 gemäß Fig. 4 lediglich dahingehend, dass die diffraktiven optischen Elemente 136 und 138 gegenüber der senkrechten Anordnung zur Strahlrichtung der Eingangswelle 24 verkippt sind, vorteilhafterweise um mindestens 1 °, insbesondere um mindestens 10°. Durch die Verkippung kann das Phasenschieben, wie in der Ausführungsform gemäß Fig. 1, durch Verschieben des als Richtungsangleichungselement dienenden diffraktiven optischen Elements 138 erfolgen. Dazu ist bei der Messvorrichtung 210 eine mit einem Doppelpfeil 39 veranschaulichte Verschiebeeinrichtung vorgesehen.

Ein weiterer wichtiger Vorteil dieser gekippten Version des Aufspaltungsmoduls ist die Unterdrückung des Reflexlichts für die Reflexion an den unstrukturierten Oberflächen des Strahlrichtungsaufspaltelements und des Richtungsangleichungselements im nicht-gekippten Fall, bei dem das Reflexlicht mit der Richtung der Eingangswelle 24 in sich zurückläuft.

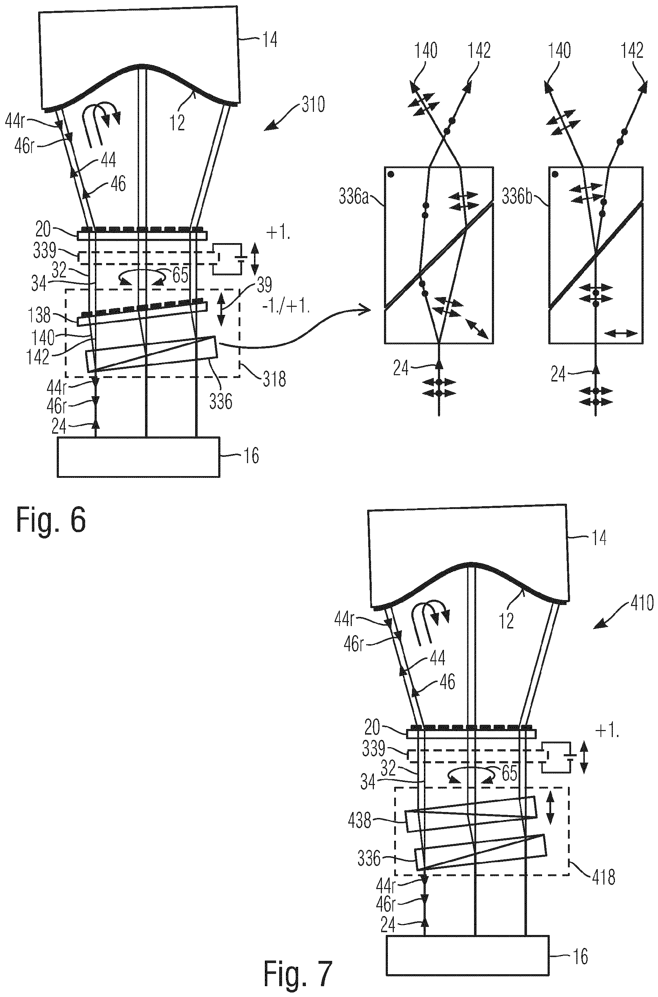

In Fig. 6 wird ein weiteres Ausführungsbeispiel 310 einer Messvorrichtung zur interferometrischen Bestimmung einer Eigenschaft einer Form einer Testoberfläche 12 eines Prüfobjekts 14 dargestellt. Die Messvorrichtung 310 unterscheidet sich von der Messvorrichtung 210 gemäß Fig. 5 lediglich dahingehend, dass das als Strahlaufspaltelement dienende Element anstatt durch das diffraktive optische Element 136 durch ein Scherprisma 336 gebildet wird. Das Scherprisma 336 ist dazu konfiguriert, die Eingangswelle 24, welche in diesem Ausführungsbeispiel unpolarisiertes oder diagonal polarisiertes Licht umfasst, in zwei zueinander verkippte Strahlen mit unterschiedlich polarisiertem Licht aufzuspalten, welche dann als die Zwischenwellen 140 und 142 fungieren.

Beispielhafte Ausführungsformen für das Scherprisma 336 können als Nomarski-Prisma 336a oder als Wollaston-Prisma 336b ausgelegt sein. Wie in Fig. 6 veranschaulicht, wird sowohl beim Nomarski-Prisma 336a als auch beim Wollaston-Prisma 336b die unpolarisierte oder diagonal polarisierte Eingangswelle 24 in zwei rechtwinklig zueinander linear polarisierte Strahlen getrennt, die in Bezug auf die Eingangswelle 24 in unterschiedlichen Richtungen abgelenkt sind und als Zwischenwellen 140 und 142 dienen. Dabei können die Zwischenwellen 140 symmetrisch zur Ausbreitungsrichtung der Eingangswelle 24 orientiert sein.

Das Phasenschieben kann in der Messvorrichtung 310, wie in der Messvorrichtung 210 gemäß Fig. 5, durch axiales Verschieben des als Richtungsangleichungselement dienenden diffraktiven optischen Elements 138 erfolgen. Weiterhin kann das Phasenschieben auch durch laterales Verschieben des Scherprismas 336 bewerkstelligt werden.

Alternativ kann zum Phasenschieben ein variables Phasenverzögerungselement 339 dienen. Dieses kann zwischen dem diffraktiven optischen Element 118 des Aufspaltungsmoduls 318 und dem als Wellenfrontanpassungsmodul 20 dienenden diffraktiven optischen Element 20 angeordnet sein. Das variable Phasenverzögerungselement 339, auch Phasenretarder bezeichnet, kann beispielsweise einen Flüssigkristall enthalten und bewirkt unterschiedliche Phasenretardierung für Wellenfronten unterschiedlicher Polarisation. Damit bewirkt dieses für die beiden Planwellen 32 und 34 bzw. die beiden rücklaufenden Messwellen 44r und 46r unterschiedliche Phasenretardierung.

In Fig. 7 wird ein weiteres Ausführungsbeispiel 410 einer Messvorrichtung zur interferometrischen Bestimmung einer Eigenschaft einer Form einer Testoberfläche 12 eines Prüfobjekts 14 dargestellt. Die Messvorrichtung 410 unterscheidet sich von der Messvorrichtung 310 gemäß Fig. 6 lediglich dahingehend, dass auch das Richtungsangleichungselement durch ein Scherprisma 438 gebildet wird. In dem daraus resultierenden Aufspaltungsmodul 418 entspricht die Funktionsweise des Scherprismas 438 der des Scherprismas 336 in umgekehrter Richtung. Das heißt, das Scherprisma 438 ist gegenüber dem Scherprisma 336 gleicher Art in umgekehrter Orientierung angeordnet. Gemäß einem nicht zeichnerisch dargestellten Ausführungsbeispiel kann das Aufspaltungsmodul 18 auch ein diffraktives optisches Element als Strahlrichtungsaufspaltelement und ein Scherprisma als Richtungsangleichungselement aufweisen.

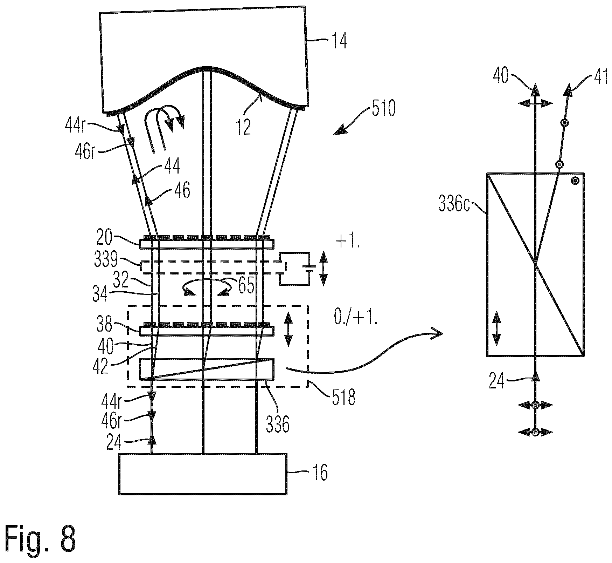

In Fig. 8 wird ein weiteres Ausführungsbeispiel 510 einer Messvorrichtung zur interferometrischen Bestimmung einer Eigenschaft einer Form einer Testoberfläche 12 eines Prüfobjekts 14 dargestellt. Die Messvorrichtung 510 unterscheidet sich von der Messvorrichtung 310 gemäß Fig. 6 lediglich dahingehend, dass das als Strahlrichtungsaufspaltelement dienende Scherprisma 336 nicht als Nomarski-Prisma bzw. als Wollaston-Prisma sondern als Rochon-Prisma 336c konfiguriert ist. Anders als in der Ausführungsform gemäß Fig. 6, bei der die vom Scherprism1 336 gebildeten Zwischenwellen 140 und 142 symmetrisch zur Ausbreitungsrichtung der Eingangswelle 24 orientiert sind, weist bei der Messvorrichtung 510 gemäß Fig. 8 aufgrund der Verwendung des Rochon-Prismas 336c die Zwischenwelle 40 die gleiche Ausbreitungsrichtung wie die Eingangswelle 24 auf, während die Zwischenwelle 42 gegenüber der Eingangswelle 24 verkippt ist.

Die Strahlführung im resultierenden Aufspaltungsmodul 518 entspricht damit im Wesentlichen der auch in der Ausführungsform 10 gemäß Fig. 1 vorliegenden Strahlführung. Als Richtungsangleichungselement kann damit das diffraktive optische Element 38 gemäß Fig. 1 oder ein ähnlich konfiguriertes diffraktives optisches Element genutzt werden. Alternativ kann ein umgekehrt orientiertes Rochon-Prisma anstatt des diffraktiven optischen Elements 38 als Richtungsangleichungselement zum Einsatz kommen. Gemäß einem weiteren, zeichnerisch nicht dargestellten, Ausführungsbeispiel wird das diffraktive optische Element 36 mit einem als Richtungsangleichungselement dienenden Rochon-Prisma kombiniert.

Wie in Fig. 8 veranschaulicht, wird beim Rochon-Prisma 336c eine unpolarisierte oder diagonal polarisierte Eingangswelle 24 in einen das Prisma unabgelenkt durchlaufenden ordentlichen Strahl (Zwischenwelle 40) und einen abgelenkten außerordentlichen Strahl (Zwischenwelle 42) umgewandelt. Die beiden Strahlen sind rechtwinklig zueinander polarisiert. Die Größe der Strahlaufspaltung und somit die Ortsauflösung der Formvermessung kann durch Verschieben der beiden Teilelemente des Rochon-Prismas oder durch Änderung des Abstands zwischen dem Rochon-Prisma, d.h. dem Scherprisma 336, und dem diffraktiven optischen Element 38, variiert werden.

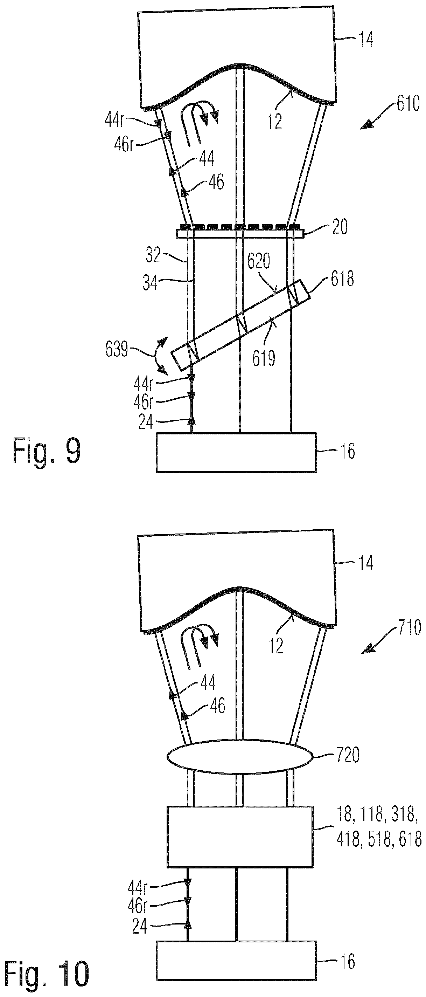

In Fig. 9 wird ein weiteres Ausführungsbeispiel 610 einer Messvorrichtung zur interferometrischen Bestimmung einer Eigenschaft einer Form einer Testoberfläche 12 eines Prüfobjekts 14 dargestellt. Die Messvorrichtung 610 unterscheidet sich von der Messvorrichtung 10 gemäß Fig. 1 lediglich dahingehend, dass das Aufspaltungsmodul nicht durch die beiden diffraktiven optischen Elemente 36 und 38, sondern durch eine Scherplatte 618 gebildet wird.

Die Scherplatte 618 ist parallelseitig, d.h. sie hat die Form eines Quaders mit parallelen Ein- bzw. Austrittsflächen 619, 620 für die Messstrahlung 30. Die Scherplatte ist gegenüber der Eingangswelle 24 verkippt angeordnet, d.h. die Normale der Ein- bzw. Austrittsflächen 619, 620 ist gegenüber der Ausbreitungsrichtung der Eingangswelle 24 verkippt, und zwar vorteilhafterweise um mindestens 1 °, insbesondere um mindestens 10° oder um mindestens 20°. Ein Teil der Strahlung der Eingangswelle 24 tritt an der Fläche 619 in die Scherplatte 618 ein, und wird an der gegenüberliegenden Fläche 620 aufgeteilt.

Ein Teil der an der Fläche 620 antreffenden Strahlung verlässt die Scherplatte 618 unmittelbar wieder und bildet die erste Planwelle 32. Der verbleibende Teil der Strahlung wird an der Fläche 620 reflektiert. Aufgrund der Verkippung der Scherplatte 618 ist der reflektierte Strahl gegenüber dem auf die Fläche 620 eintreffenden Strahl verkippt. Ein Teil der reflektierten Strahlung wird abermals an der Fläche 619 reflektiert, und tritt dann an der Fläche 620 als zweite Planwelle 34 aus. Diese ist gegenüber der ersten Planwelle 32 versetzt.

Das Phasenschieben kann durch Verkippen der Scherplatte 618 erfolgen. Dazu weist die Messvorrichtung 610 eine Kippvorrichtung 639 auf. Andere Möglichkeiten des Phasenschiebens, wie etwa die bereits vorstehend beschriebene Variierung der Wellenlänge der Messstrahlung 30, können hier ebenfalls zu Anwendung kommen.

In Fig. 10 wird ein weiteres Ausführungsbeispiel 710 einer Messvorrichtung zur interferometrischen Bestimmung einer Eigenschaft einer Form einer Testoberfläche 12 eines Prüfobjekts 14 dargestellt. Die Messvorrichtung 610 unterscheidet sich von den Messvorrichtung 10, 110, 210, 310, 410, 510 oder 610 gemäß Fig. 1, 4, 5, 6, 7, 8 bzw. 9 lediglich dahingehend, dass das Wellenfrontanpassungsmodul nicht als diffraktives optisches Element, sondern als Linse 720, insbesondere als asphärische Linse, konfiguriert ist.

Die vorstehende Beschreibung beispielhafter Ausführungsbeispiele, Ausführungsformen bzw. Ausführungsvarianten ist exemplarisch zu verstehen. Die damit erfolgte Offenbarung ermöglicht es dem Fachmann einerseits, die vorliegende Erfindung und die damit verbundenen Vorteile zu verstehen, und umfasst andererseits im Verständnis des Fachmanns auch offensichtliche Abänderungen und Modifikationen der beschriebenen Strukturen und Verfahren. Daher sollen alle derartigen Abänderungen und Modifikationen, insoweit sie in den Rahmen der Erfindung gemäß der Definition in den beigefügten Ansprüchen fallen, sowie Äquivalente vom Schutz der Ansprüche abgedeckt sein.

### Bezugszeichenliste

- 10: Messvorrichtung
- 12: Testoberfläche
- 14: Prüfobjekt
- 16: Strahlungserzeugungs- und Auswerteeinrichtung
- 18: Aufspaltungsmodul
- 20: diffraktives optisches Element als Wellenfrontanpassungsmodul
- 22: Bestrahlungseinrichtung
- 24: Eingangswelle
- 25: ebene Wellenfront
- 26: Strahlungsquelle
- 28: Kollimatorlinse
- 30: Messstrahlung
- 31: Strahlenteiler
- 32: erste Planwelle
- 33: ebene Wellenfront
- 34: zweite Planwelle
- 35: ebene Wellenfront
- 36: diffraktives optisches Element als Strahlrichtungsaufspaltelement
- 38: diffraktives optisches Element als Richtungsangleichungselement
- 39: Verschiebeeinrichtung
- 40: erste Zwischenwelle
- 41: ebene Wellenfront
- 42: zweite Zwischenwelle
- 43: ebene Wellenfront
- 44: erste Messwelle
- 44r: reflektierte erste Messwelle
- 45: Wellenfront der ersten Messwelle
- 46: zweite Messwelle
- 46r: reflektierte zweite Messwelle
- 47: Wellenfront der zweiten Messwelle
- 50: Form der Testoberfläche
- 52: Ableitungen der Form der Testoberfläche
- 54: Okular
- 56: Detektor
- 58: Kamera
- 60: Wellenfront der ersten reflektierten Messwelle
- 62: Wellenfront der zweiten reflektierten Messwelle
- 64: Interferogramm
- 65: Dreheinrichtung
- 66: Auswerteeinrichtung
- 68: erstes Auswertemodul
- 70: zweites Auswertemodul
- 72: Überschusswelle
- 74: planer Kalibrierspiegel
- 76: Kalibrierwelle
- 78: Kalibrierwelle
- 110: Messvorrichtung
- 118: Aufspaltungsmodul
- 136: diffraktives optisches Element als Strahlrichtungsaufspaltelement
- 138: diffraktives optisches Element als Richtungsangleichungselement
- 139: Wellenlängenmanipulationseinrichtung
- 210: Messvorrichtung
- 310: Messvorrichtung
- 318: Aufspaltungsmodul
- 336: Scherprisma
- 336a: Nomarski-Prisma
- 336b: Wollaston-Prisma
- 336c: Rochon-Prisma
- 339: variables Phasenverzögerungselement
- 410: Messvorrichtung
- 418: Aufspaltungsmodul
- 438: Scherprisma
- 510: Messvorrichtung
- 518: Aufspaltungsmodul
- 610: Messvorrichtung
- 618: Scherplatte
- 619: Ein- bzw. Austrittsfläche
- 620: Ein- bzw. Austrittsfläche
- 639: Verkippeinrichtung
- 720: Linse als Wellenfrontanpassungsmodul

## Patentansprüche

1. Messvorrichtung (10; 110; 210; 310; 410; 510; 610; 710) zur interferometrischen Bestimmung einer Eigenschaft (50; 52) einer Form (50) einer Testoberfläche (12) eines Prüfobjekts (14), umfassend:
- eine Bestrahlungseinrichtung (22) zum Erzeugen einer Eingangswelle (24),
- ein Aufspaltungsmodul (18; 118; 318; 418; 518), welches dazu konfiguriert ist, aus der Eingangswelle zwei Planwellen (32, 34) mit parallelen Ausbreitungsrichtungen, welche quer zu den Ausbreitungsrichtungen zueinander versetzt sind, zu erzeugen,
- ein Wellenfrontanpassungsmodul (20; 720) zum Erzeugen von zwei Messwellen (44, 46) durch Anpassen der jeweiligen Wellenfront der zueinander versetzten Planwellen an eine Sollform der optischen Testoberfläche, sowie
- einen Detektor (56) zum Erfassen mindestens eines Interferogramms (64), welches durch Überlagerung der Messwellen (44r, 46r) nach deren Wechselwirkung mit der Testoberfläche erzeugt wird.

2. Messvorrichtung nach Anspruch 1,
welche derart konfiguriert ist, dass die Messwellen (44r, 46r) nach deren Wechselwirkung mit der Testoberfläche vor Auftreffen auf den Detektor (56) das Aufspaltungsmodul (18) in umgekehrter Richtung wie die Strahlung der Eingangswelle (24) durchlaufen und dabei die Messwellen aufeinander hin versetzt werden.

3. Messvorrichtung nach Anspruch 1 oder 2,
welche eine Auswerteeinrichtung (66) umfasst, welche dazu konfiguriert ist, unter Verwendung des mindestens einen erfassten Interferogramms (64) mindestens eine Ableitung (52) der Form der Testoberfläche (50) zu ermitteln.

4. Messvorrichtung nach einem der vorausgehenden Ansprüche,
welche dazu konfiguriert ist, eine Aufspaltungsrichtung der zwei Planwellen (32, 34) zu variieren.

5. Messvorrichtung nach Anspruch 3 oder 4,
bei der die Auswerteeinrichtung (66) dazu konfiguriert ist, Ableitungen (52) der Form der Testoberfläche an mehreren Orten der Testoberfläche zu ermitteln und die Form (50) der Testoberfläche durch Integration der ermittelten Ableitungen zu bestimmen.

6. Messvorrichtung nach einem der vorausgehenden Ansprüche,
bei welcher das Aufspaltungsmodul (18; 118; 318; 418; 518) ein Strahlrichtungsaufspaltelement (36; 136; 336) sowie ein Richtungsangleichungselement (38; 138; 438) umfasst, wobei das Strahlrichtungsaufspaltelement dazu konfiguriert ist, aus der Eingangswelle (24) zwei Zwischenwellen (40, 42; 140, 142) mit unterschiedlichen Ausbreitungsrichtungen zu erzeugen, und das Richtungsangleichungselement dazu konfiguriert ist, die zwei zueinander versetzten Planwellen (32, 34) durch aneinander Angleichen der Ausbreitungsrichtungen der beiden Zwischenwellen zu erzeugen.

7. Messvorrichtung nach Anspruch 6,
bei welcher das Strahlrichtungsaufspaltungselement und/oder das Richtungsangleichungselement als diffraktives optisches Element (36; 136, 38; 138) konfiguriert ist.

8. Messvorrichtung nach Anspruch 7,
bei der das Strahlaufspaltungselement (36) und/oder das Richtungsangleichungselement (38) jeweils dazu konfiguriert ist, eingehende Strahlung (24; 40, 42) lediglich in die nullte und betragsmäßig erste Beugungsordnung zu beugen.

9. Messvorrichtung nach Anspruch 7,
bei der das Strahlaufspaltungselement (136) und/oder das Richtungsangleichungselement (138) jeweils dazu konfiguriert sind, eingehende Strahlung lediglich in die +1. und die -1. Beugungsordnung zu beugen.

10. Messvorrichtung nach einem der Ansprüche 6 bis 9,
bei der das Strahlrichtungsaufspaltungselement (36; 136) und das Richtungsangleichungselement (38; 138) zueinander invers konfigurierte diffraktive optische Elemente sind.

11. Messvorrichtung nach Anspruch 6,
bei der das Strahlrichtungsaufspaltelement (336) und/oder das Richtungsangleichungselement (438) als Scherprisma konfiguriert ist.

12. Messvorrichtung nach Anspruch 6 oder 11,
bei der das Richtungsangleichungselement (438) als Scherprisma konfiguriert ist, welches gegenüber einem als das Strahlrichtungsaufspaltelement (336) dienenden Scherprisma gleicher Art im umgekehrter Orientierung angeordnet ist.

13. Messvorrichtung nach einem der Ansprüche 6 bis 12,
bei der das Strahlrichtungsaufspaltelement (36; 336) dazu konfiguriert ist, die zweite Zwischenwelle (42) von der Eingangswelle (24) abzuspalten, wobei die erste Zwischenwelle (40) ein das Strahlrichtungsaufspaltelement ohne Ablenkung durchlaufender Anteil der Eingangswelle ist.

14. Messvorrichtung nach einem der Ansprüche 6 bis 13,
wobei die die Ausbreitungsrichtungen der Zwischenwellen (140, 142) symmetrisch zur Ausbreitungsrichtung der Eingangswelle (24) orientiert sind.

15. Messvorrichtung nach einem der Ansprüche 6 bis 14,
welche dazu konfiguriert ist, einen Abstand zwischen dem Strahlrichtungsaufspaltelement (36) und dem Richtungsangleichungselement (38) zu verändern.

16. Messvorrichtung nach einem der Ansprüche 1 bis 5,
bei welcher das Aufspaltungsmodul (618) eine Scherplatte umfasst.

17. Messvorrichtung nach einem der vorausgehenden Ansprüche,
welche dazu konfiguriert ist, einen Spiegel für die EUV-Mikrolithographie als Prüfobjekt (14) zu vermessen.

18. Verfahren zur interferometrischen Bestimmung einer Eigenschaft (50; 52) einer Form einer Testoberfläche (12) eines Prüfobjekts (14), mit den Schritten:
- Erzeugen von zwei Planwellen (32, 34) mit zwei parallelen Ausbreitungsrichtungen, welche quer zu den Ausbreitungsrichtungen versetzt sind, durch Aufspalten einer Eingangswelle,
- Erzeugen von zwei Messwellen (44, 46) aus den Planwellen durch Anpassen der jeweiligen Wellenfront der zueinander versetzten Planwellen an eine Sollform der optischen Testoberfläche, sowie
- Erzeugen mindestens eines Interferogramms (64) durch Überlagerung der Messwellen (44r, 46r) nach deren Wechselwirkung mit der Testoberfläche und Erfassen des Interferogramms.
